# EUROPÄISCHE PATENTSCHRIFT

(11) **EP 1 950 441 B1**
(45) Veröffentlichungstag und Bekanntmachung des Hinweises auf die Patenterteilung: **28.11.2012**
(21) Anmeldenummer: 08000440.1
(22) Anmeldetag: 11.01.2008
(51) Int. Cl.: F16D 13/75

(54) **Selbstnachstellende Reibungskupplung**
Self adjusting friction coupling
Embrayage à friction avec dispositif de rattrapage automatique

(30) Priorität: 27.01.2007 DE 102007004167
(43) Veröffentlichungstag der Anmeldung: 30.07.2008
(73) Patentinhaber: Schaeffler Technologies AG & Co. KG, 91074 Herzogenaurach (DE)
(72) Erfinder: Lindenbaum, Tobias, 76530 Baden-Baden (DE); Meinhard, Rolf, 77815 Bühl (DE); Friedmann, Oswald, 77839 Lichtenau (DE)

(56) Entgegenhaltungen:
- EP-A1- 1 568 905
- DE-A1- 10 134 118
- DE-A1- 10 316 445

## Beschreibung

Die Erfindung betrifft eine Reibungskupplung mit einem Gehäuse und einer mit diesem drehfest, jedoch axial beweglich verbunden Anpressplatte, wobei zwischen dem Gehäuse und der Anpressplatte ein verschwenkbarer Federhebel vorgesehen ist, mit dem die Reibungskupplung betätigbar ist. Der Federhebel ist insgesamt ringscheibenförmig und aus einer Mehrzahl von in Umfangsrichtung nebeneinander angeordneten Hebelelementen zusammengesetzt.

Derartige Reibungskupplungen sind beispielsweise aus der DE 103 16 445 A1, der DE 101 34 118 A1 und der DE 34 46 460 A1 bekannt. In diesen Druckschriften sind insbesondere Reibungskupplungen beschrieben, die durch Einleiten einer externen Kraft auf den Federhebel geschlossen werden und durch die Entlastung des Federhebels geöffnet werden. In der DE 103 16 445 A1 wird zusätzlich vorgeschlagen, an den Reibbelägen einer Kupplungsscheibe auftretenden Verschleiß zu kompensieren.

Eine Reibungskupplung umfassend eine Anpressplatte, einer ringscheibenförmige Federhebel mit Hebelelementen zum Betätigen der Reibungskupplung, wobei ein radial äußeres Umfangsmaß des Federhebels veränderbar ist, ist aus EP 1 568 905 bekannt.

Der Erfindung liegt die Aufgabe zugrunde, solche Reibungskupplungen derart weiter zu bilden, dass durch Betätigung des Federhebels Reibbelagverschleiß ausgeglichen werden kann, sodass eine Kupplungsmomentenkennlinie weitgehend unabhängig vom Verschleiß der Kupplung über deren Lebensdauer erhalten bleibt. Dabei soll die erfindungsgemäße selbstnachstellende Reibungskupplung einen kompakten Aufbau aufweisen, der durch eine in sie integrierte Verschleißnachstelleinrichtung nicht wesentlich vergrößert ist.

Eine erste Lösung dieser Aufgabe wird mit einer Reibungskupplung erzielt, die enthält: ein Gehäuse, eine mit diesem drehfest, jedoch axial begrenzt beweglich verbundene Anpressplatte, einen zwischen dem Gehäuse und der Anpressplatte vorgesehenen, insgesamt ringscheibenförmigen Federhebel mit einer Mehrzahl in Umfangsrichtung beabstandet angeordneter Hebelelemente zum Betätigen der Reibungskupplung, wobei ein radial äußeres Umfangsmaß des Federhebels infolge einer axialen Verstellung eines radial inneren Umfangsbereiches des Federhebels veränderbar ist, einen Rampenring, über den der Federhebel an der Anpressplatte anliegt, und eine Verschleißnachstelleinrichtung mit einem Schneckenrad, das mit einer Umfangsverzahnung und in einer Stirnseite mit einer Schneckenrille ausgebildet ist, wobei die Umfangsverzahnung mit einer an einem Federarm ausgebildeten, in eine Richtung wirkenden Mitnehmerverzahnung derart zusammenwirkt, dass das Schneckenrad bei einer überschwelligen Vergrößerung oder Verkleinerung des Umfangsmaßes verdreht wird und die Schneckenrille in selbsthemmendem Eingriff mit einer am Rampenring ausgebildeten Gegenverzahnung derart ist, dass eine Verdrehung des Schneckenrades eine Relativdrehung zwischen dem Federhebel und dem Rampenring bewirkt, infolge der sich die Zuordnung zwischen der Stellung des Federhebels und der Stellung der Anpressplatte im Sinne eines Ausgleichs von Verschleiß von Reibbelägen verändert, wobei das Schneckenrad radial außerhalb eines Wirkkreises, auf dem sich der Federhebel über den Rampenring an der Anpressplatte abstützt, an der Anpressplatte gelagert ist und die Gegenverzahnung an einem kreisbogenförmigen Ausleger des Rampenrings ausgebildet ist.

Der Radius des kreisbogenförmigen Auslegers ist vorteilhafter Weise zumindest annähernd gleich dem Abstand der Drehachse des Schneckenrades von der Achse der Reibungskupplung.

Der Ausleger kann durch Ausbiegen von Material des Rampenrings hergestellt sein.

Alternativ kann der Ausleger mit dem Rampenring starr verbunden sein.

Eine weitere Lösung der Erfindungsaufgabe wird mit einer Reibungskupplung erzielt, die enthält: ein Gehäuse, eine mit diesem drehfest, jedoch axial begrenzt beweglich verbundene Anpressplatte, einen zwischen dem Gehäuse und der Anpressplatte vorgesehenen, insgesamt ringscheibenförmigen Federhebel mit einer Mehrzahl in Umfangsrichtung beabstandet angeordneter Hebelelemente zum Betätigen der Reibungskupplung, wobei ein radial äußeres Umfangsmaß des Federhebels infolge einer axialen Verstellung eines radial inneren Umfangsbereiches des Federhebels veränderbar ist, einen Rampenring, über den der Federhebel an der Anpressplatte anliegt, und eine Verschleißnachstelleinrichtung mit einem Schneckenrad , das mit einer Umfangsverzahnung und in einer Stirnseite mit einer Schneckenrille ausgebildet ist, wobei die Umfangsverzahnung mit einer an einem Federarm ausgebildeten, in eine Richtung wirkenden Mitnehmerverzahnung derart zusammenwirkt, dass das Schneckenrad bei einer überschwelligen Vergrößerung oder Verkleinerung des Umfangsmaßes verdreht wird und die Schneckenrille in selbsthemmendem Eingriff mit einer am Rampenring ausgebildeten Gegenverzahnung derart ist, dass eine Verdrehung des Schneckenrades eine Relativdrehung zwischen dem Federhebel und dem Rampenring bewirkt, infolge der sich die Zuordnung zwischen der Stellung des Federhebels und der Stellung der Anpressplatte im Sinne eines Ausgleichs von Verschleiß von Reibbelägen verändert, wobei das Schneckenrad an der von der Anpressplatte abgewandten Seite des Federhebels an einem mit dem Federhebel verbundenen Haltebauteil derart gelagert ist, dass die Drehachse des Schneckenrades von der Achse der Kupplung in einem Abstand angeordnet ist, der gleich dem Radius des Wirkkreises ist, auf dem sich der Federhebel über den Rampenring an der Anpressplatte abstützt, und die Gegenverzahnung an einer Stirnfläche des Rampenrings ausgebildet ist.

Vorteilhafterweise befindet sich die Außenverzahnung des Schneckenrades der letztgenannten Reibungskupplung etwa in gleicher Ebene wie der äußere Umfangsbereich des Federhebels und weist der Federhebel an seinem Umfang eine Ausnehmung auf, in die das Schneckenrad einragt.

Eine dritte Lösung der oben genannten Erfindungsaufgabe wird mit einer Reibungskupplung erzielt, die enthält: ein Gehäuse, eine mit diesem drehfest, jedoch axial begrenzt beweglich verbundene Anpressplatte, einen zwischen dem Gehäuse und der Anpressplatte vorgesehenen, insgesamt ringscheibenförmigen Federhebel mit einer Mehrzahl in Umfangsrichtung beabstandet angeordneter Hebelelemente zum Betätigen der Reibungskupplung, wobei ein radial äußeres Umfangsmaß des Federhebels infolge einer axialen Verstellung eines radial inneren Umfangsbereiches des Federhebels veränderbar ist, einen Rampenring, über den der Federhebel an der Anpressplatte anliegt, und eine Verschleißnachstelleinrichtung mit einem Schneckenrad, das mit einer Umfangsverzahnung und an einer Stirnseite mit einer Schneckenrille ausgebildet ist, wobei die Umfangsverzahnung mit einer an einem Federarm ausgebildeten, in eine Richtung wirkenden Mitnehmerverzahnung derart zusammenwirkt, dass das Schneckenrad bei einer überschwelligen Vergrößerung oder Verkleinerung des Umfangsmaßes verdreht wird und die Schneckenrille in selbsthemmendem Eingriff mit einer am Rampenring ausgebildeten Gegenverzahnung derart ist, dass eine Verdrehung des Schneckenrades eine Relativdrehung zwischen dem Federhebel und dem Rampenring bewirkt, infolge der sich die Zuordnung zwischen der Stellung des Federhebels und der Stellung der Anpressplatte im Sinne eines Ausgleichs von Verschleiß von Reibbelägen verändert, wobei das Schneckenrad an der von der Anpressplatte abgewandten Seite des Federhebels an einem mit dem Federhebel verbundenen Haltebauteil gelagert ist und die Gegenverzahnung auf einer Stirnfläche eines Auslegers des Rampenrings ausgebildet ist.

Eine weitere erfindungsgemäße Reibungskupplung enthält: ein Gehäuse, eine mit diesem drehfest, jedoch axial begrenzt beweglich verbundenen Anpressplatte, einen zwischen dem Gehäuse und der Anpressplatte vorgesehenen, insgesamt ringscheibenförmigen Federhebel mit einer Mehrzahl in Umfangsrichtung beabstandet angeordneter Hebelelemente zum Betätigen der Reibungskupplung, wobei ein radial äußeres Umfangsmaß des Federhebels infolge einer axialen Verstellung eines radial inneren Umfangsbereiches des Federhebels veränderbar ist, und eine Verschleißnachstelleinrichtung mit einem Schneckenrad, das mit einer Umfangsverzahnung und an einer Stirnseite mit einer Schneckenrille ausgebildet ist, wobei die Umfangsverzahnung mit einer an einem Federarm ausgebildeten, in eine Richtung wirkenden Mitnehmerverzahnung derart zusammenwirkt, dass das Schneckenrad bei einer überschwelligen Vergrößerung oder Verkleinerung des Umfangsmaßes verdreht wird und die Schneckenrille in selbsthemmendem Eingriff mit einer am Gehäuse ausgebildeten Gegenverzahnung ist, so dass eine Verdrehung des Schneckenrades eine Relativdrehung zwischen dem Federhebel und der Anpressplatte bewirkt, infolge der sich die Zuordnung zwischen der Stellung des Federhebels und der Stellung der Anpressplatte im Sinne eines Ausgleichs von Verschleiß von Reibbelägen verändert, wobei der Federhebel und die Anpressplatte mit in gegenseitiger Anlage befindlichen Rampenflächen ausgebildet sind, deren axiale Dicke sich in Umfangsrichtung ändert, und wobei das Schneckenrad innerhalb einer Aussparung des Federhebels gelagert ist.

Die Erfindung wird im Folgenden anhand schematischer Zeichnungen beispielsweise und mit weiteren Einzelheiten erläutert.

In den Figuren stellen dar:
- Fig. 1: einen Prinziphalbschnitt durch eine Reibungskupplung,
- Fig. 2: eine Aufsicht auf einen Federhebel,
- Fig. 3: eine Schnittansicht gemäß III-III der Fig. 2,
- Fig. 4: eine Schnittansicht gemäß IV-IV der Fig. 2,
- Fig. 5: eine perspektivische Ansicht einer Anpressplatte und eines Federhebels einer erfindungsgemäßen Reibungskupplung,
- Fig. 6: eine Detailschnittansicht gemäß VI der Fig. 5,
- Fig. 7: eine perspektivische und eine Detailausschnittansicht eines Rampenrings,
- Fig. 8: eine perspektivische Ansicht einer abgeänderten Ausführungsform eines Rampenrings,
- Fig. 9: eine perspektivische Ansicht einer Anpressplatte mit darüber befindlichem Federhebel gemäß einer weiteren Ausführungsform einer erfindungsgemäßen Kupplung,
- Fig. 10: eine Aufsicht auf den Federhebel gemäß Fig. 9,
- Fig. 11: eine perspektivische Ansicht einer Anpressplatte mit darüber befindlichem Federhebel gemäß einer weiteren Ausführungsform einer erfindungsgemäßen Kupplung,
- Fig. 12: eine perspektivische Ansicht einer Anpressplatte mit darüber befindlichem Federhebel einer weiteren Ausführungsform einer erfindungsgemäßen Kupplung, und
- Fig. 13: eine Detailschnittansicht der Ausführungsform der Kupplung gemäß Fig. 12.

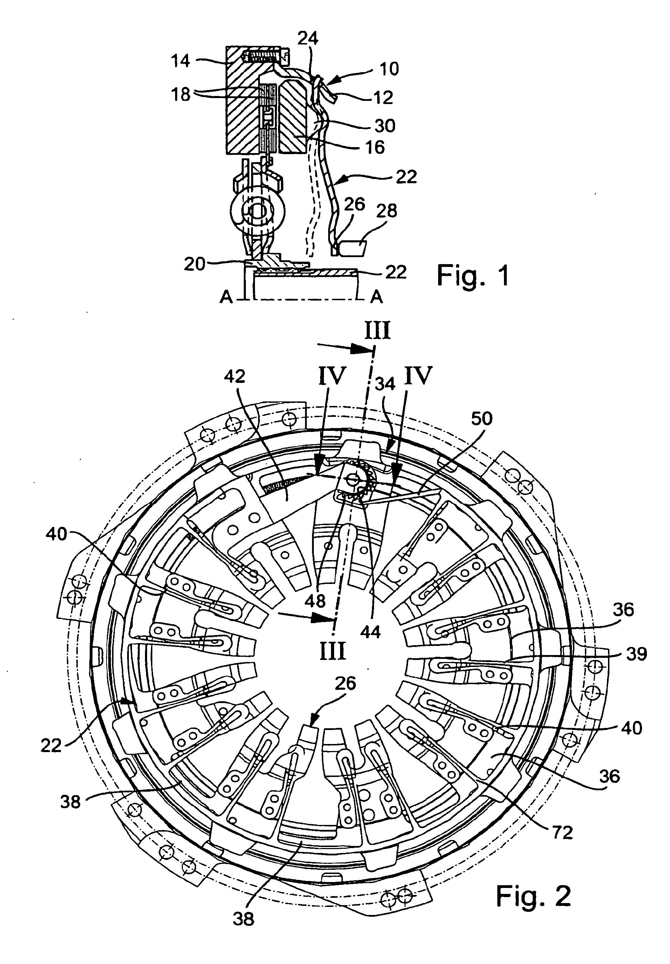

Fig. 1 zeigt einen Halbschnitt einer insgesamt mit 10 bezeichneten Reibungskupplung, die um eine Achse A-A drehbar ist. Die Reibungskupplung besitzt in an sich bekannter Weise ein Gehäuse 12 bzw. einen als Zuganker ausgebildeten Deckel, das bzw. der mit einer Gegendruckplatte 14 beispielsweise über eine Verschraubung oder Vernietung fest verbunden ist. Eine Anpressplatte 16 ist mit dem als Blechdeckel ausgebildeten Gehäuse 12 drehfest, jedoch axial begrenzt verlagerbar verbunden. Diese Verbindung kann beispielsweise mittels Blattfederkopplungen erfolgen. Zwischen der Anpressplatte 16 und der Gegendruckplatte 14 sind Reibbeläge 18 einer Kupplungsscheibe 20 einspannbar. Die Kupplungsscheibe 20 ist mit einer Getriebeausgangswelle 22 in an sich bekannter Weise zur Drehmomentübertragung verbunden.

Ein aus einzelnen Hebelelementen zusammengesetzter insgesamt ringscheibenförmiger Federhebel 22 stützt sich an seinem äußeren Umfang 24 an dem Gehäuse 12 ab und ist an seinem inneren Umfang 26 in Eingriff mit einem Betätigungsbauteil 28, das beispielsweise über ein zur Drehachse A-A konzentrisches Lager mit einem Aktor oder einem Kupplungspedal verbunden ist.

Zwischen seinem äußeren Umfang 24 und seinem inneren Umfang 26 stützt sich der Federhebel 22 über Rampenflächen 30, deren axiale Dicke sich in Umfangsrichtung ändert, an der Anpressplatte 16 ab.

Die Stellung der Bauteile gemäß Fig. 1 entspricht dem gelösten bzw. offenen Zustand der Kupplung. Die punktiert eingezeichnete Stellung des Federhebels 22 entspricht der geschlossenen Stellung der Kupplung, in der die Anpressplatte 16 von dem Federhebel 22 gegen die Gegendruckplatte 14 gepresst wird, so dass die Kupplungsscheibe 20 zusammen mit der Gegendruckplatte 14, die beispielsweise Bestandteil einer Schwungscheibe eines Verbrennungsmotors sein kann, dreht.

Wie aus dem Vorstehenden folgt, wird die Kupplung gemäß Fig. 1 von dem Betätigungsbauteil 28 in ihren geschlossenen Zustand gedrängt und befindet sich bei kraftlosem Betätigungsbauteil in ihrer Offenstellung. Der Federhebel 22 bildet insgesamt ein tellerfederartiges Bauteil, das bei Betätigung durch das Betätigungsbauteil 28 konisch verformt wird und beispielsweise bei offener Kupplung sich zumindest annähernd in seinem Ausgangszustand befindet.

Wenn die Reibbeläge 18 verschleißen oder andere Teile der Kupplung mit zunehmender Betriebsdauer Verschleiß zeigen, muss sich das Betätigungsbauteil 28 zum vollständigen Schließen der Kupplung weiter bewegen, das heißt der Federhebel 22 muss über die gepunktete Stellung hinaus konisch verformt werden. Zum Ausgleich dieses Verschleißes wird der Federhebel 22 relativ zur Anpressplatte 16 um die Achse A-A und damit relativ zu den Rampenflächen 30 verdreht, wodurch infolge der axialen Steigung der Rampenflächen der bei Stellung des Federhebels 22 in der Stellung gemäß Fig. 1 spielfreie Abstand zwischen dem Federhebel 22 und der Anpressplatte 16 wieder hergestellt wird.

Im Folgenden wird die Verschleißnachstelleinrichtung, die in Fig. 2 insgesamt mit 34 bezeichnet ist, anhand der Fig. 2 bis 4 erläutert.

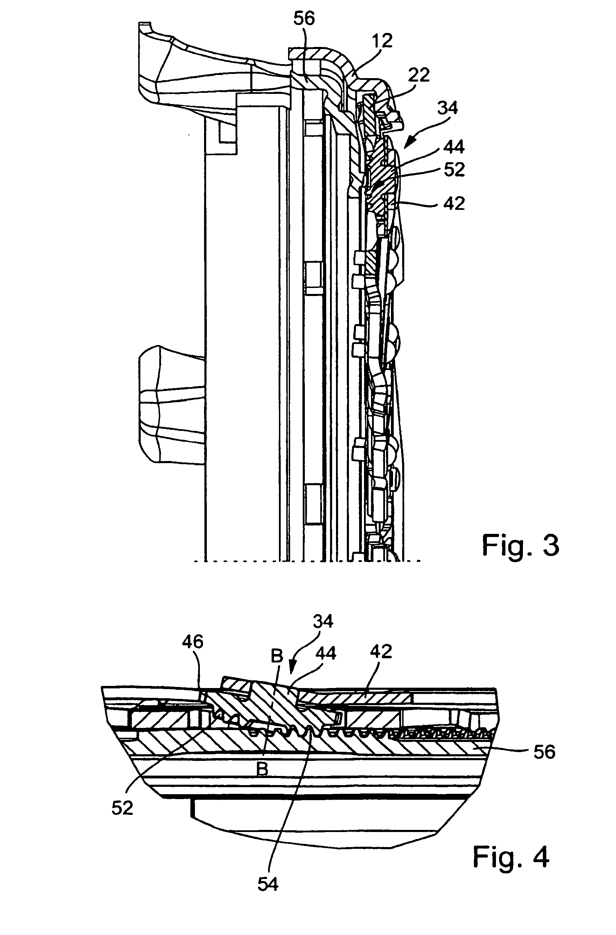

Fig. 2 zeigt eine Aufsicht auf den in Fig. 1 nicht mit den Details der Fig. 2 bis 4 dargestellten Federhebel 22. Fig. 3 zeigt einen Schnitt längs III-III der Fig. 2 und Fig. 4 zeigt einen Schnitt längs der Linie IV-IV der Fig. 2.

Wie insbesondere aus Fig. 2 ersichtlich, ist der Federhebel 22 aus einzelnen Hebelsegmenten bzw. Hebelelementen 36 zusammengesetzt, die in Umfangsrichtung nebeneinander angeordnet sind, wobei benachbarte Hebelelemente 36 umfangsmäßig über Verbindungselemente bzw. -bereiche 38 miteinander verbunden sind, die im dargestellten Beispiel jeweils mit Hebelelementen 36 einteilig ausgebildet sind. Die Hebelelemente 36 sind mit elastischen Verbindungsbereichen 39 einer Antriebsfeder 72 verbunden, beispielsweise vernietet. Die Verbindungsbereiche 39 sind gebogen derart ausgebildet, dass sie insbesondere eine Relativbewegung zwischen der Antriebsfeder 72 und den Hebelelementen 36 in Umfangsrichtung zulassen. Insgesamt bilden die Hebelelemente 36 zusammen mit den Verbindungsbereichen 38 den tellerfederartig ausgebildeten Federhebel 22, der sich, wie in Fig. 1 dargestellt, an seinem Außenumfang am Gehäuse 12 der Reibungskupplung abstützt und mit dessen Innenumfang mit dem Betätigungsbauteil 28 in Eingriff ist. Längs des äußeren Umfangsbereichs des Federhebels 22 sind durch die Biegung der speichenförmigen Verbindungsbereiche 39 der Antriebsfeder 72 Schlitze 40 gebildet, die sich je nach konischer Verformung des Federhebels 22 mittels des Betätigungsbauteils 28 erweitern oder verengen.

Im dargestellten Beispiel sei angenommen, dass sich die Weite der Schlitze 40 verkleinert, wenn der innere Umfang des Federhebels 22 gemäß Fig. 1 nach rechts bewegt wird. Die Weite ist minimal, wenn das Betätigungsbauteil 28 aus der Stellung gemäß Fig. 1 nach rechts über die der offenen Stellung der Kupplung hinaus gehende Ruhelage verschoben wird.

Mit einem der Hebelelemente 36 ist ein Blattfederarm 42 beispielsweise durch Nieten starr verbunden, an dessen freiem Ende ein Schneckenrad 44 drehbar gelagert ist. Das Schneckenrad 44 ist mit einer Umfangsverzahnung 46 ausgebildet, in die eine Mitnehmerverzahnung 48 eingreift, die am Ende eines Federarms 50 ausgebildet ist, der im dargestellten Beispiel mit dem Außenumfangsbereich des Hebelelementes 36 verbunden ist, das dem mit dem Blattfederarm 42 versehenen Hebelelement nicht unmittelbar benachbart ist. Die Mitnehmerverzahnung 48 enthält mindestens einen Zahn und bildet zusammen mit dem Federarm 50 eine Klinke, die in einer Richtung sperrt und in die andere Richtung "frei läuft".

Dazu ist der Federarm 50 derart ausgebildet, dass er die Mitnehmerverzahnung 48 in Eingriff in die Umfangsverzahnung 46 drängt. Die Verzahnungen 46 und 48 sind derart geformt, dass im dargestellten Beispiel gemäß Fig. 2 die Mitnehmerverzahnung 48 das Schneckenrad 34 in Gegenuhrzeigerrichtung dreht, jedoch eine Drehung des Schneckenrades 44 in Uhrzeigerrichtung nicht zwangsläufig erfolgt, sondern sich die Verzahnungen dabei überlaufen können.

Wie aus den Fig. 3 und 4 ersichtlich, ist das Schneckenrad 44 an seiner Unterseite mit einer spiralförmig verlaufenden Schneckenrille 52 versehen. Die Achse B-B, um die das Schneckenrad 44 drehbar im Blattfederarm 42 gelagert ist, ist zur Umfangsrichtung derart geneigt, dass nur einer der beiden bezogen auf die Drehachse B-B in Umfangsrichtung liegenden Bereiche der Schneckenrille 52 in eine Gegenverzahnung 54 eingreift, deren Zähne radial gerichtet sind und die in einem mit dem Gehäuse 12 starr verbundenen Bauteil 56 oder am Gehäuse selbst ausgebildet ist.

Die Funktion der Verschleißnachstelleinrichtung 34 ist folgende:
Es sei angenommen, der Abstand zwischen den Schlitzen 40 bzw. die Länge des äußeren Umfangs 24 des Federhebels 22 nehme bei Bewegung des Federhebels 22 über die gepunktete Stellung der Fig. 1 nach links hinaus durch Verschleiß der Kupplungsscheibenbeläge zu. Wenn dieses Maß bzw. dieser Schwellwert den Modul der Verzahnung 46, 48 übersteigt, überfährt die Mitnehmerverzahnung 48 die Umfangsverzahnung 46 gemäß Fig. 2 nach links, so dass bei einer anschließenden Rückkehr des Federhebels in die Stellung gemäß Fig. 1 das Schneckenrad 44 in Gegenuhrzeigerrichtung verdreht wird. Infolge des Eingriffs der Schneckenrille 52 in die Gegenverzahnung 54, wobei dieser Eingriff durch eine entsprechende Vorspannung des Blattfederarms 42 gewährleistet ist, führt dies zu einer Relativverdrehung zwischen dem Federhebel 22 und dem gehäusefesten Bauteil 56 bzw. dem Gehäuse 12 und damit auch zwischen dem Federhebel 22 und der mit dem Gehäuse 12 drehfest verbundenen Anpressplatte 16. Auf diese Weise verschiebt sich die Rampenfläche 30 relativ zu dem Federhebel 22, so dass aufgetretener Verschleiß nachgestellt wird.

Der Blattfederarm 42, der das Schneckenrad 44 axial in die Gegenverzahnung 54 drängt, überträgt auch das zum Verdrehen notwendige Drehmoment zwischen dem Gehäuse und der Ringscheibenfeder.

Der Blattfederarm 42 kann einteilig mit dem zugehörigen Hebelelement ausgebildet sein oder zusammen mit dem Schneckenrad eine vormontierte Einheit bilden, die an dem zugehörigen Hebelelement befestigt wird. Vorteilhaft ist eine Ausbildung derart, dass die Gegenverzahnung 54 etwa den gleichen Abstand von der Drehachse A-A (Fig. 1) hat, wie die Achse B-B des Schneckenrades 44. Weiter ist vorteilhaft, die Umfangsverzahnung 46 des Schneckenrades auf einem größeren Durchmesser anzuordnen als der Durchmesser der Schneckenrille 52.

Der Eingriff zwischen der Schneckenrille 52 und der Gegenverzahnung 54 ist zwar selbsthemmend; vorteilhaft ist, das Schneckenrad 44 zur Reibmomentenerhöhung gegenüber dem Blattfederarm 42 mit einer zusätzlichen Reibeinrichtung, beispielsweise einer Federscheibe oder ähnlichem zu versehen.

Die Drehrichtung des Schneckenrades 44 ist vorteilhafter Weise so, dass die in Umfangsrichtung wirkende Komponente der von dem Federarm (50) auf das Schneckenrad (44) ausgeübten Kraft zu der in Umfangsrichtung wirkenden Komponente der von der Gegenverzahnung (54) auf die Schneckenrille (52) wirkenden Kraft entgegengesetzt gerichtet ist. Dadurch muss in der Lagerung des Schneckenrades nur die Differenz aus der Klinkenkraft und der von der Schneckenverzahnung herrührenden Kraft abgestützt werden. Mit anderen Worten: Die Kraftrichtung des zusammen mit der Mitnehmerverzahnung 48 eine Klinkenfeder bildenden Federarms 50 verläuft vorteilhafter Weise entgegen der Drehrichtung des Federhebels, wodurch die Lagerung des Schneckenrades 44 am Blattfederarm 42 entlastet wird.

Die Schneckenrille 52 kann zusammen mit der Gegenverzahnung 54 mit trapezförmigem Querschnitt ausgebildet werden, wodurch die axiale Andruckkraft des Schneckenrades 44 vermindert werden kann, in Umfangsrichtung aber die Selbsthemmung erhalten bleibt.

Vorteilhaft ist, das Schneckenrad 44 als Sinter- oder Kaltfließpressteil auszubilden und zu härten.

Die beispielhaft geschilderte selbstnachstellende Kupplung, bei der eine in eine vorbestimmte tangentiale bzw. in Umfangsrichtung erfolgende Bewegung eines Bauteils (der Klinke) über ein selbsthemmendes Untersetzungsgetriebe in eine Relativverdrehung zweier Bauteile (Hebelfeder und Bauteil 56) umgewandelt und über eine Rampenfläche in eine axiale Verschiebung umgesetzt wird, kann vielfältig abgeändert werden:
Das Bauteil 56 kann ein Rampenring mit Rampenflächen sein. Die Hebelfeder ist dann bezüglich des Gehäuses 12 drehfest. Die Kupplung kann in Schließstellung gezogen und/oder in Offenstellung gedrückt oder gezogen sein. Die Hebelfeder kann ein komplex zusammengesetztes Bauteil sein, das bei axialer Verschiebung ein Umfangsmaß nur an einer Stelle verändert, so dass das an dieser Stelle angeordnete Untersetzungsgetriebe besonders wirksam ist. Für den Federarm 50, der über den Eingriff zwischen seiner Mitnehmerverzahnung 48 und der Umfangsverzahnung 44 des Schneckenrades eine in eine Richtung wirkende Antriebsfeder zum Verdrehen des Schneckenrades bildet, gibt es unterschiedlichste Ausführungsmöglichkeiten, denen allen gemeinsam ist, dass der Federarm 50 unmittelbar mit dem Federhebel 22 verbunden oder an einem mit dem Federhebel 22 verbundenen Bauteil ausgebildet ist derart, dass die Mitnehmerverzahnung 48 die Umfangsverzahnung 46 bei einer Veränderung eines Umfangsmaßes des Federhebels 22 durch dessen chronische Verformung überfährt und bei einer Veränderung des Umfangsmaßes in der Gegenrichtung das Schneckenrad 44 zur Verschleißnachstellung verdreht.

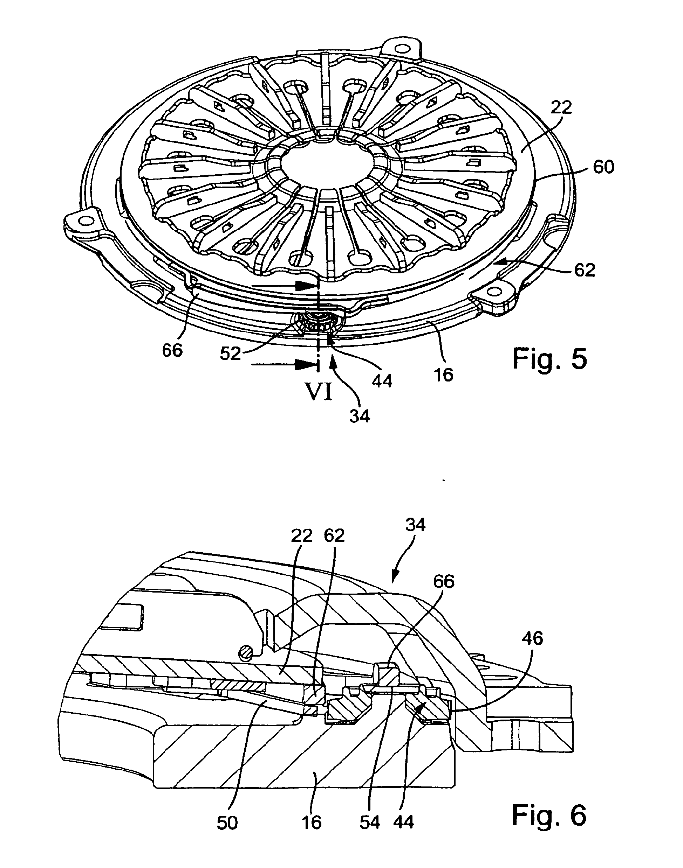

Im Folgenden werden anhand der Fig. 5 bis 13 vorteilhafte Anordnungen und Ausführungsformen des Schneckenrades 14 zusammen mit dessen Funktion erläutert.

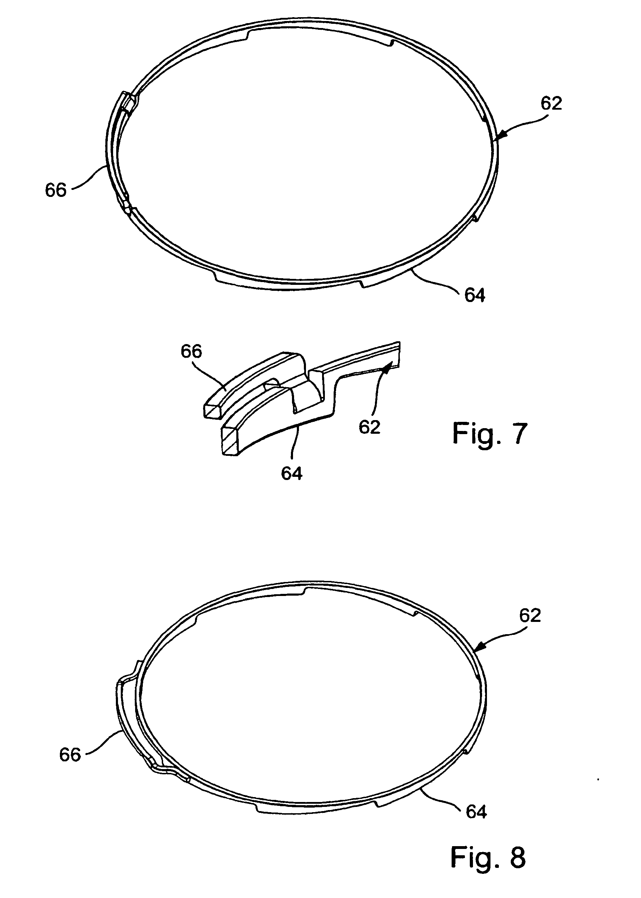

Gemäß Fig. 5 ist das Schneckenrad 44 unmittelbar an der Anpressplatte 16 mit einer Drehachse gelagert, die sich radial außerhalb eines Rampenwirkkreises 60 befindet, längs dessen der Federhebel 22 auf der Stirnfläche eines Rampenrings 62 aufliegt, der mit in Umfangsrichtung sich in ihrer axialen Dicke ändernden Rampenflächen 64 (Fig. 7) auf entsprechenden Gegenflächen aufliegt, die an der Anpressplatte 16 ausgebildet sind. Der Rampenring 62 ist relativ zu dem Federhebel 22 und der Anpressplatte 16 verdrehbar, die relativ zum Kupplungsgehäuse drehfest gehalten sind. Die Schneckenrille 52 des Schneckenrades 44 kämmt mit der Gegenverzahnung 54, die an der die Anpressplatte 16 zugewandten Stirnseite eines Auslegers 66 des Rampenrings ausgebildet ist, die eine den Rampenflächen entsprechende Spiralsteigung aufweist. Der kreisbogenförmig gestaltete Ausleger hat bezogen auf die Achse der Kupplung einen Radius, der zumindest annähernd gleichgroß ist wie der Abstand der Drehachse des Schneckenrades von der Achse der Kupplung. Der in die Umfangsverzahnung 46 des Schneckenrades 44 eingreifende Federarm 50 befindet sich auf der der Anpressplatte 16 zugewandten Seite des Federhebels 22.

Die Funktion der in Fig. 6 im Schnitt dargestellten Verschleißnachstelleinrichtung 34 entspricht insgesamt der der weiter oben im Detail geschilderten Ausführungsform gemäß den Fig. 1 bis 4. Wenn das Schneckenrad 44 vom Federarm 50 bei einer überschwelligen Verformung des Federhebels 22 verdreht wird, verdreht die in selbsthemmendem Eingriff mit der Stirnverzahnung des Auslegers 66 des Rampenrings 62 befindliche Schneckenrille 52 den Rampenring, wodurch sich dessen Abstand von der Anpressplatte 16 und somit auch der Abstand der Anpressplatte 16 von der auf dem Rampenring 62 aufliegenden Fläche des Federhebels 22 im Sinne einer Verschleißnachstellung ändert.

Die Fig. 7 und 8 zeigen zwei unterschiedliche Ausführungsformen des Rampenrings 62.

Bei der Ausführungsform gemäß Fig. 7 ist der Ausleger 66 unmittelbar einteilig mit dem Rampenring 62 ausgebildet, indem Material des Rampenrings zu dem Ausleger 66 herausgestellt bzw. herausgeformt ist.

Bei der Ausführungsform gemäß Fig. 8 ist der Ausleger 66 ein gesondertes Bauteil, das mit dem Rampenring 62 durch Verschweißen, Verlöten, Vernieten oder sonst wie starr verbunden ist.

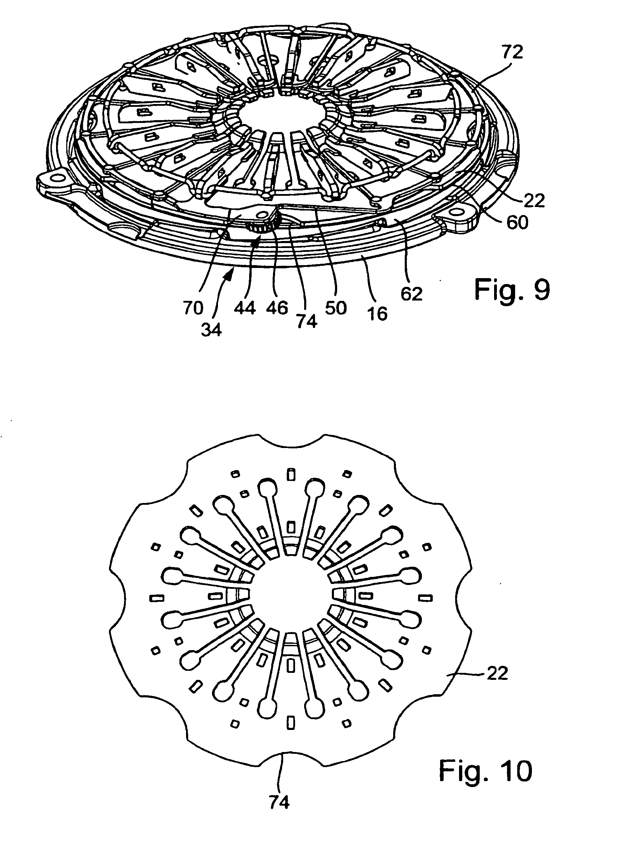

Die Ausführungsform gemäß Fig. 9 ähnelt bezüglich der Unterbringung des Schneckenrades 54 der Ausführungsform gemäß den Fig. 1 bis 4 dahingehend, dass sich das Schneckenrad 44 an der von der Anpressplatte 16 abgewandten Seite des Federhebels 22 unmittelbar unter dem Gehäuse der Kupplung (in Fig. 9 nicht dargestellt) befindet. Die Abstützung zwischen dem Federhebel 22 und der Anpressplatte 16 erfolgt über einen Rampenring 62 ähnlich wie bei der Ausführungsform gemäß Fig. 5. Das Schneckenrad 44 ist in einer Lasche 70 einer mit dem Federhebel 22 vorzugsweise vernieteten Antriebsfeder 72 gelagert, zu welcher Antriebsfeder auch der mit dem Schneckenrad 44 zusammenwirkende Federarm 50 gehört. Der mit der Umfangsverzahnung 46 ausgebildete Bereich des Schneckenrades 44 befindet sich platzsparend in einer Ebene mit dem Federhebel 22, der an seinem Umfang mit Ausnehmungen 74 zur Aufnahme eines Bereiches des Schneckenrades 44 ausgebildet ist (siehe auch Fig. 10). Die Drehachse des Schneckenrads 44 befindet sich etwa auf der Linie des Rampenwirkkreises 60 längs dessen ein Umfang- bzw. Kraftrand des Federhebels 22 auf dem Rampenring 62 aufliegt. Die in Fig. 9 nicht sichtbare Schneckenrille 52 des Schneckenrades 44 kämmt unmittelbar mit einer auf einem entsprechenden Bereich der Stirnfläche des Rampenrings 62 ausgebildeten Verzahnung. Die Funktionsweise der Ausführungsform gemäß Fig. 9 entspricht der der Fig. 5.

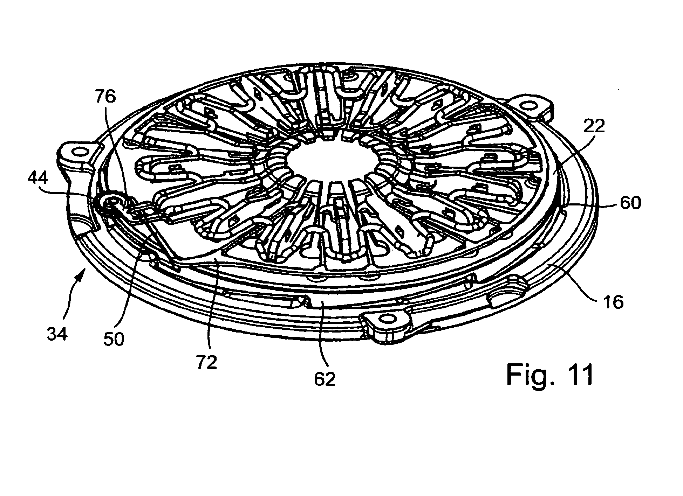

Fig. 11 zeigt eine der Fig. 9 ähnliche Ausführungsform der Kupplung, wobei jedoch das Schneckenrad 54 sich insgesamt auf der von der Anpressplatte 16 abgewandten Seite des Federhebels 22 befindet und an einem separaten Schneckenradhalter 76 gelagert ist, der mit dem Federhebel 22 beispielsweise vernietet ist. Die Drehachse des Schneckenrades 44 befindet sich radial außerhalb des Rampenwirkkreises 60 bzw. des Kraftrandes des Federhebels 22, an dem dieser auf dem Rampenring 62 aufliegt. Die in Fig. 11 nicht sichtbare Schneckenrille 52 des Schneckenrades 44 ist mit einer Gegenverzahnung in Eingriff, die an einem entsprechend gestalteten Ausleger des Rampenrings 62 ausgebildet ist, dessen radiale Position der des Schneckenrades 44 entspricht. Der Ausleger greift außerhalb des Kraftrandes des Federhebels 22 an diesem vorbei.

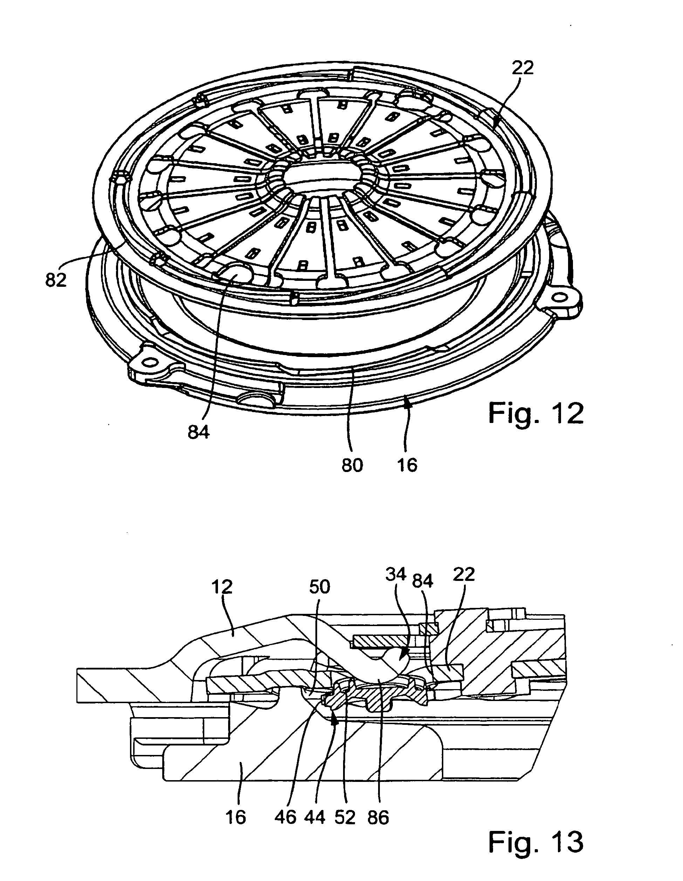

Fig. 12 und 13 zeigen eine abgeänderte Ausführungsform der Kupplung, bei der sich entsprechende Rampenflächen 80, 82 unmittelbar an der Anpressplatte 16 und dem Federhebel 22 ausgebildet sind, so dass der gesonderte Rampenring der anderen Ausführungsformen entfällt. Die Anpressplatte 16 ist drehfest mit dem Kupplungsgehäuse verbunden, während der Federhebel 22 relativ zu der Anpressplatte 16 mittels der Verschleißnachstelleinrichtung verstellbar ist. Die Verschleißnachstelleinrichtung enthält, wie aus Fig. 13 ersichtlich, ein Schneckenrad 44, das in einer von Aussparungen 84 drehbar gelagert ist, die in dem Federhebel 22 radial innerhalb der Rampenflächen 82 ausgebildet sind. Ein Federarm 50 zum Verdrehen des Schneckenrades 54 ist auf der der Anpressplatte 16 zugewandten Seite des Federhebels 22 angeordnet. Die Schneckenrille 52 des Schneckenrades 54 ist in Eingriff mit einer in Fig. 12 und 13 nicht sichtbaren Gegenverzahnung, die in einer insgesamt ringförmigen oder ringsegmentförmigen Anlagefläche 86 des Gehäuses 12 ausgebildet ist, an der der tellerfederartig ausgebildete Federhebel 22 anliegt. Die Funktion der Ausführungsform gemäß Fig. 12 und 13 entspricht insoweit der der anderen Ausführungsformen, als das Schneckenrad 44 bei einer überschwelligen Verformung des Federhebels 22 verdreht wird und dabei wegen des Eingriffs zwischen der Schneckenrille 52 und der am Gehäuse ausgebildeten Gegenverzahnung der Federhebel 22 relativ zum Gehäuse 12 und damit relativ zu der Anpressplatte 16 verdreht wird, so dass der Abstand zwischen dem Federhebel 22 und der Anpressplatte 16 sich wegen der relativ zueinander verschobenen Rampenflächen 80 und 82 im Sinne einer Verschleißnachstellung ändert.

### Bezugszeichenliste

- 10: Reibungskupplung
- 12: Gehäuse
- 14: Gegendruckplatte
- 16: Anpressplatte
- 18: Reibbelag
- 20: Kupplungsscheibe
- 22: Federhebel
- 24: äußerer Umfang
- 26: innerer Umfang
- 28: Betätigungsbauteil
- 30: Rampenfläche
- 34: Verschleißnachstelleinrichtung
- 36: Hebelelement
- 38: Verbindungsbereich
- 39: Verbindungsbereich
- 40: Schlitz
- 42: Blattfederarm
- 44: Schneckenrad
- 46: Umfangsverzahnung
- 48: Mitnehmerverzahnung
- 50: Federarm
- 52: Schneckenrille
- 54: Gegenverzahnung
- 56: Bauteil
- 60: Rampenwirkkreis
- 62: Rampenring
- 64: Rampenfläche
- 66: Ausleger
- 70: Lasche
- 72: Antriebsfeder
- 74: Ausnehmung
- 76: Schneckenradhalter
- 80: Rampenfläche
- 82: Rampenfläche
- 84: Aussparung

## Patentansprüche

1. Reibungskupplung mit einem Gehäuse (12), einer mit diesem drehfest, jedoch axial begrenzt beweglich verbundenen Anpressplatte (16), einem zwischen dem Gehäuse und der Anpressplatte vorgesehenen, insgesamt ringscheibenförmigen Federhebel (22) mit einer Mehrzahl in Umfangsrichtung beabstandet angeordneter Hebelelemente zum Betätigen der Reibungskupplung, wobei ein radial äußeres Umfangsmaß des Federhebels infolge einer axialen Verstellung eines radial inneren Umfangsbereiches des Federhebels veränderbar ist, einem Rampenring (62), über den der Federhebel an der Anpressplatte anliegt, und einer Verschleißnachstelleinrichtung (34) mit einem Schneckenrad (44), das mit einer Umfangsverzahnung (46) und in einer Stirnseite mit einer Schneckenrille (52) ausgebildet ist, wobei die Umfangsverzahnung mit einer an einem Federarm (50) ausgebildeten, in eine Richtung wirkenden Mitnehmerverzahnung (48) derart zusammenwirkt, dass das Schneckenrad bei einer überschwelligen Vergrößerung oder Verkleinerung des Umfangsmaßes verdreht wird und die Schneckenrille in selbsthemmendem Eingriff mit einer am Rampenring ausgebildeten Gegenverzahnung (54) derart ist, dass eine Verdrehung des Schneckenrades eine Relativdrehung zwischen dem Federhebel und dem Rampenring bewirkt, infolge der sich die Zuordnung zwischen der Stellung des Federhebels und der Stellung der Anpressplatte im Sinne eines Ausgleichs von Verschleiß von Reibbelägen verändert, wobei das Schneckenrad (44) radial außerhalb eines Wirkkreises (60), auf dem sich der Federhebel (22) über den Rampenring (62) an der Anpressplatte (16) abstützt, an der Anpressplatte gelagert ist und die Gegenverzahnung (54) an einem kreisbogenförmigen Ausleger (66) des Rampenrings ausgebildet ist.

2. Reibungskupplung nach Anspruch 1, wobei der Radius des kreisbogenförmigen Auslegers (66) zumindest annähernd gleich dem Abstand der Drehachse des Schneckenrades (44) von einer Achse der Reibungskupplung ist.

3. Reibungskupplung nach Anspruch 1 oder 2, wobei der Ausleger (66) durch Ausbiegen von Material des Rampenrings (62) hergestellt ist.

4. Reibungskupplung nach Anspruch 1 oder 2, wobei der Ausleger (66) mit dem Rampenring (62) starr verbunden ist.

5. Reibungskupplung mit einem Gehäuse (12), einer mit diesem drehfest, jedoch axial begrenzt beweglich verbundenen Anpressplatte (16), einem zwischen dem Gehäuse und der Anpressplatte vorgesehenen, insgesamt ringscheibenförmigen Federhebel (22) mit einer Mehrzahl in Umfangsrichtung beabstandet angeordneter Hebelelemente zum Betätigen der Reibungskupplung, wobei ein radial äußeres Umfangsmaß des Federhebels infolge einer axialen Verstellung eines radial inneren Umfangsbereiches des Federhebels veränderbar ist, einem Rampenring (62), über den der Federhebel an der Anpressplatte anliegt, und einer Verschleißnachstelleinrichtung (34) mit einem Schneckenrad (44), das mit einer Umfangsverzahnung (46) und in einer Stirnseite mit einer Schneckenrille (52) ausgebildet ist, wobei die Umfangsverzahnung mit einer an einem Federarm (50) ausgebildeten, in eine Richtung wirkenden Mitnehmerverzahnung (48) derart zusammenwirkt, dass das Schneckenrad bei einer überschwelligen Vergrößerung oder Verkleinerung des Umfangsmaßes verdreht wird und die Schneckenrille in selbsthemmendem Eingriff mit einer am Rampenring ausgebildeten Gegenverzahnung (54) derart ist, dass eine Verdrehung des Schneckenrades eine Relativdrehung zwischen dem Federhebel und dem Rampenring bewirkt, infolge der sich die Zuordnung zwischen der Stellung des Federhebels und der Stellung der Anpressplatte im Sinne eines Ausgleichs von Verschleiß von Reibbelägen verändert, wobei das Schneckenrad (44) an der von der Anpressplatte (16) abgewandten Seite des Federhebels (22) an einem mit dem Federhebel verbundenen Haltebauteil (70) derart gelagert ist, dass die Drehachse des Schneckenrades von der Achse der Kupplung in einem Abstand angeordnet ist, der gleich dem Radius des Wirkkreises (60) ist, auf dem sich der Federhebel über den Rampenring (62) an der Anpressplatte (16) abstützt, und die Gegenverzahnung (54) an einer Stirnfläche des Rampenrings ausgebildet ist.

6. Reibungskupplung nach Anspruch 5, wobei sich die Umfangsverzahnung (46) des Schneckenrades (44) etwa in gleicher Ebene wie der äußere Umfangsbereich des Federhebels (22) befindet und der Federhebel an seinem Umfang eine Ausnehmung (74) aufweist, in die das Schneckenrad einragt.

7. Reibungskupplung mit einem Gehäuse (12), einer mit diesem drehfest, jedoch axial begrenzt beweglich verbundenen Anpressplatte (16), einem zwischen dem Gehäuse und der Anpressplatte vorgesehenen, insgesamt ringscheibenförmigen Federhebel (22) mit einer Mehrzahl in Umfangsrichtung beabstandet angeordneter Hebelelemente zum Betätigen der Reibungskupplung, wobei ein radial äußeres Umfangsmaß des Federhebels infolge einer axialen Verstellung eines radial inneren Umfangsbereiches des Federhebels veränderbar ist, einem Rampenring (62), über den der Federhebel an der Anpressplatte anliegt, und einer Verschleißnachstelleinrichtung (34) mit einem Schneckenrad (44), das mit einer Umfangsverzahnung (46) und an einer Stirnseite mit einer Schneckenrille (52) ausgebildet ist, wobei die Umfangsverzahnung mit einer an einem Federarm (50) ausgebildeten, in eine Richtung wirkenden Mitnehmerverzahnung (48) derart zusammenwirkt, dass das Schneckenrad bei einer überschwelligen Vergrößerung oder Verkleinerung des Umfangsmaßes verdreht wird und die Schneckenrille in selbsthemmendem Eingriff mit einer am Rampenring ausgebildeten Gegenverzahnung (54) derart ist, dass eine Verdrehung des Schneckenrades eine Relativdrehung zwischen dem Federhebel und dem Rampenring bewirkt, infolge der sich die Zuordnung zwischen der Stellung des Federhebels und der Stellung der Anpressplatte im Sinne eines Ausgleichs von Verschleiß von Reibbelägen verändert, wobei das Schneckenrad (44) an der von der Anpressplatte (16) abgewandten Seite des Federhebels (22) an einem mit dem Federhebel verbundenen Haltebauteil (76) gelagert ist und die Gegenverzahnung (54) auf einer Stirnfläche eines Auslegers (66) des Rampenrings (62) ausgebildet ist.

8. Reibungskupplung mit einem Gehäuse (12), einer mit diesem drehfest, jedoch axial begrenzt beweglich verbundenen Anpressplatte (16), einem zwischen dem Gehäuse und der Anpressplatte vorgesehenen, insgesamt ringscheibenförmigen Federhebel (22) mit einer Mehrzahl in Umfangsrichtung beabstandet angeordneter Hebelelemente zum Betätigen der Reibungskupplung, wobei ein radial äußeres Umfangsmaß des Federhebels infolge einer axialen Verstellung eines radial inneren Umfangsbereiches des Federhebels veränderbar ist, und einer Verschleißnachstelleinrichtung (34) mit einem Schneckenrad (44), das mit einer Umfangsverzahnung (46) und an einer Stirnseite mit einer Schneckenrille (52) ausgebildet ist, wobei die Umfangsverzahnung mit einer an einem Federarm (50) ausgebildeten, in eine Richtung wirkenden Mitnehmerverzahnung (46) derart zusammenwirkt, dass das Schneckenrad bei einer überschwelligen Vergrößerung oder Verkleinerung des Umfangsmaßes verdreht wird und die Schneckenrille in selbsthemmendem Eingriff mit einer am Gehäuse (12) ausgebildeten Gegenverzahnung ist, so dass eine Verdrehung des Schneckenrades eine Relativdrehung zwischen dem Federhebel und der Anpressplatte bewirkt, infolge der sich die Zuordnung zwischen der Stellung des Federhebels und der Stellung der Anpressplatte im Sinne eines Ausgleichs von Verschleiß von Reibbelägen verändert, wobei der Federhebel (22) und die Anpressplatte (16) mit in gegenseitiger Anlage befindlichen Rampenflächen (80, 82) ausgebildet sind, deren axiale Dicke sich in Umfangsrichtung ändert, und wobei das Schneckenrad (44) innerhalb einer Aussparung (84) des Federhebels gelagert ist.

## Claims

1. Friction clutch with a housing (12), a pressure plate (16) which is connected to said housing for conjoint rotation therewith but so as to be axially movable to a limited extent, a spring lever (22) which is provided between the housing and the pressure plate and the overall shape of which is that of an annular disc and which has a plurality of lever elements arranged spaced apart in the circumferential direction and intended for actuating the friction clutch, wherein a radially outer circumferential extent of the spring lever is changeable as a result of an axial adjustment of a radially inner circumferential region of the spring lever, a ramp ring (62) via which the spring lever bears against the pressure plate, and a wear adjustment device (34) with a worm gear (44) which is formed with a circumferential toothing (46) and with a worm groove (52) in an end side, wherein the circumferential toothing interacts with a driver toothing (48), which is formed on a spring arm (50) and acts in one direction, in such a manner that the worm gear is rotated in the event of an increase or reduction of the circumferential extent beyond a threshold, and the worm groove is in self-locking engagement with a mating toothing (54), which is formed on the ramp ring, in such a manner that rotation of the worm gear causes a relative rotation between the spring lever and the ramp ring, as a consequence of which the assignment between the position of the spring lever and the position of the pressure plate changes, with the effect of compensating for wear of frictional coatings, wherein the worm gear (44) is mounted on the pressure plate (16) radially outside an effective circle (60) on which the spring lever (22) is supported on the pressure plate (16) via the ramp ring (62), and the mating toothing (54) is formed on a ramp-ring extension arm (66) which is in the shape of an arc of a circle.

2. Friction clutch according to Claim 1, wherein the radius of the extension arm (66) which is in the shape of an arc of a circle is at least approximately identical to the distance of the axis of rotation of the worm gear (44) from an axis of the friction clutch.

3. Friction clutch according to Claim 1 or 2, wherein the extension arm (66) is produced by bending out material of the ramp ring (62).

4. Friction clutch according to Claim 1 or 2, wherein the extension arm (66) is connected rigidly to the ramp ring (62).

5. Friction clutch with a housing (12), a pressure plate (16) which is connected to said housing for conjoint rotation therewith but so as to be axially movable to a limited extent, a spring lever (22) which is provided between the housing and the pressure plate and the overall shape of which is that of an annular disc and which has a plurality of lever elements arranged spaced apart in the circumferential direction and intended for actuating the friction clutch, wherein a radially outer circumferential extent of the spring lever is changeable as a result of an axial adjustment of a radially inner circumferential region of the spring lever, a ramp ring (62) via which the spring lever bears against the pressure plate, and a wear adjustment device (34) with a worm gear (44) which is formed with a circumferential toothing (46) and with a worm groove (52) in an end side, wherein the circumferential toothing interacts with a driver toothing (48), which is formed on a spring arm (50) and acts in one direction, in such a manner that the worm gear is rotated in the event of an increase or reduction of the circumferential extent beyond a threshold, and the worm groove is in self-locking engagement with a mating toothing (54), which is formed on the ramp ring, in such a manner that rotation of the worm gear causes a relative rotation between the spring lever and the ramp ring, as a consequence of which the assignment between the position of the spring lever and the position of the pressure plate changes, with the effect of compensating for wear of frictional coatings, wherein the worm gear (44) is mounted on that side of the spring lever (22) which faces away from the pressure plate (16) on a retaining component (70), which is connected to the spring lever, in such a manner that the axis of rotation of the worm gear is arranged at a distance from the axis of the clutch that is equal to the radius of the effective circle (60) at which the spring lever is supported on the pressure plate (16) via the ramp ring (62), and the mating toothing (54) is formed on an end surface of the ramp ring.

6. Friction clutch according to Claim 5, wherein the circumferential toothing (46) of the worm gear (44) is located approximately in the same plane as the outer circumferential region of the spring lever (22), and the circumference of the spring lever has a recess (74) into which the worm gear projects.

7. Friction clutch with a housing (12), a pressure plate (16) which is connected to said housing for conjoint rotation therewith but so as to be axially movable to a limited extent, a spring lever (22) which is provided between the housing and the pressure plate and the overall shape of which is that of an annular disc and which has a plurality of lever elements arranged spaced apart in the circumferential direction and intended for actuating the friction clutch, wherein a radially outer circumferential extent of the spring lever is changeable as a result of an axial adjustment of a radially inner circumferential region of the spring lever, a ramp ring (62) via which the spring lever bears against the pressure plate, and a wear adjustment device (34) with a worm gear (44) which is formed with a circumferential toothing (46) and with a worm groove (52) in an end side, wherein the circumferential toothing interacts with a driver toothing (48), which is formed on a spring arm (50) and acts in one direction, in such a manner that the worm gear is rotated in the event of an increase or reduction of the circumferential extent beyond a threshold, and the worm groove is in self-locking engagement with a mating toothing (54), which is formed on the ramp ring, in such a manner that rotation of the worm gear causes a relative rotation between the spring lever and the ramp ring, as a consequence of which the assignment between the position of the spring lever and the position of the pressure plate changes, with the effect of compensating for wear of frictional coatings, wherein the worm gear (44) is mounted on that side of the spring lever (22) which faces away from the pressure plate (16) on a retaining component (76), which is connected to the spring lever, and the mating toothing (54) is formed on an end side of an extension arm (66) of the ramp ring (62).

8. Friction clutch with a housing (12), a pressure plate (16) which is connected to said housing for conjoint rotation therewith but so as to be axially movable to a limited extent, a spring lever (22) which is provided between the housing and the pressure plate and the overall shape of which is that of an annular disc and which has a plurality of lever elements arranged spaced apart in the circumferential direction and intended for actuating the friction clutch, wherein a radially outer circumferential extent of the spring lever is changeable as a result of an axial adjustment of a radially inner circumferential region of the spring lever, and a wear adjustment device (34) with a worm gear (44) which is formed with a circumferential toothing (46) and with a worm groove (52) in an end side, wherein the circumferential toothing interacts with a driver toothing (48), which is formed on a spring arm (50) and acts in one direction, in such a manner that the worm gear is rotated in the event of an increase or reduction of the circumferential extent beyond a threshold, and the worm groove is in self-locking engagement with a mating toothing, which is formed on the housing (12), in such a manner that rotation of the worm gear causes a relative rotation between the spring lever and the pressure plate, as a consequence of which the assignment between the position of the spring lever and the position of the pressure plate changes, with the effect of compensating for wear of frictional coatings, wherein the spring lever (22) and the pressure plate (16) are formed with ramp surfaces (80, 82) which are in mutual contact and the axial thickness of which changes in the circumferential direction, and wherein the worm gear (44) is mounted within a recess (84) of the spring lever.

## Revendications

1. Embrayage à friction comprenant un boîtier (12), un plateau de pressage (16) connecté à celui-ci de manière solidaire en rotation mais avec un mouvement axial limité, un levier à ressort (22) dans l'ensemble en forme de disque annulaire prévu entre le boîtier et le plateau de pressage, avec une pluralité d'éléments de levier disposés de manière espacée dans la direction périphérique pour actionner l'embrayage à friction, une dimension périphérique radialement extérieure du levier à ressort pouvant être modifiée à la suite d'un déplacement axial d'une région périphérique radialement interne du levier à ressort, une bague en rampe (62), par le biais de laquelle le levier à ressort s'applique contre le plateau de pressage, et un dispositif de rattrapage de l'usure (34) avec une roue à denture hélicoïdale (44) qui est réalisée avec une denture périphérique (46) et, dans un côté frontal, avec une gorge hélicoïdale (52), la denture périphérique coopérant avec une denture d'entraînement (48) réalisée sur un bras élastique (50), agissant dans une direction, de telle sorte que la roue à denture hélicoïdale, dans le cas d'une augmentation ou d'une réduction excessive de la dimension périphérique, soit tournée et que la gorge hélicoïdale soit en prise autobloquante avec une denture conjuguée (54) réalisée sur la bague en rampe, de telle sorte qu'une rotation de la roue à denture hélicoïdale provoque une rotation relative entre le levier à ressort et la bague en rampe, suite à quoi l'association entre la position du levier à ressort et la position du plateau de pressage se modifie dans le sens d'une compensation de l'usure des garnitures de friction, la roue à denture hélicoïdale (44) étant montée sur le plateau de pressage radialement à l'extérieur d'un cercle d'action (60) sur lequel le levier à ressort (22) s'appuie contre le plateau de pressage (16) par le biais de la bague en rampe (62), et la denture conjuguée (54) étant réalisée sur un bras en porte-à-faux (66) en forme d'arc de cercle de la bague en rampe.

2. Embrayage à friction selon la revendication 1, dans lequel le rayon du bras en porte-à-faux (66) en forme d'arc de cercle est au moins approximativement égal à la distance de l'axe de rotation de la roue à denture hélicoïdale (44) à un axe de l'embrayage à friction.

3. Embrayage à friction selon la revendication 1 ou 2, dans lequel le bras en porte-à-faux (66) est fabriqué par cintrage vers l'extérieur du matériau de la bague en rampe (62).

4. Embrayage à friction selon la revendication 1 ou 2, dans lequel le bras en porte-à-faux (66) est connecté rigidement à la bague en rampe (62).

5. Embrayage à friction comprenant un boîtier (12), un plateau de pressage (16) connecté à celui-ci de manière solidaire en rotation mais avec un mouvement axial limité, un levier à ressort (22) dans l'ensemble en forme de disque annulaire prévu entre le boîtier et le plateau de pressage, avec une pluralité d'éléments de levier disposés de manière espacée dans la direction périphérique pour actionner l'embrayage à friction, une dimension périphérique radialement extérieure du levier à ressort pouvant être modifiée à la suite d'un déplacement axial d'une région périphérique radialement interne du levier à ressort, une bague en rampe (62), par le biais de laquelle le levier à ressort s'applique contre le plateau de pressage, et un dispositif de rattrapage de l'usure (34) avec une roue à denture hélicoïdale (44) qui est réalisée avec une denture périphérique (46) et, dans un côté frontal, avec une gorge hélicoïdale (52), la denture périphérique coopérant avec une denture d'entraînement (48) réalisée sur un bras élastique (50), agissant dans une direction, de telle sorte que la roue à denture hélicoïdale, dans le cas d'une augmentation ou d'une réduction excessive de la dimension périphérique, soit tournée et que la gorge hélicoïdale soit en prise autobloquante avec une denture conjuguée (54) réalisée sur la bague en rampe, de telle sorte qu'une rotation de la roue à denture hélicoïdale provoque une rotation relative entre le levier à ressort et la bague en rampe, suite à quoi l'association entre la position du levier à ressort et la position du plateau de pressage se modifie dans le sens d'une compensation de l'usure des garnitures de friction, la roue à denture hélicoïdale (44) étant montée, du côté du levier à ressort (22) opposé au plateau de pressage (16), sur un composant de retenue (70) connecté au levier à ressort, de telle sorte que l'axe de rotation de la roue à denture hélicoïdale soit disposé à une distance de l'axe de l'embrayage qui est égale au rayon du cercle d'action (60) sur lequel le levier à ressort s'appuie par le biais de la bague en rampe (62) contre le plateau de pressage (16), et la denture conjuguée (54) étant réalisée sur une face frontale de la bague en rampe.

6. Embrayage à friction selon la revendication 5, dans lequel la denture périphérique (46) de la roue à denture hélicoïdale (44) se trouve approximativement dans le même plan que la région périphérique extérieure du levier à ressort (22) et le levier à ressort présente à sa périphérie un évidement (74) dans lequel pénètre la roue à denture hélicoïdale.

7. Embrayage à friction comprenant un boîtier (12), un plateau de pressage (16) connecté à celui-ci de manière solidaire en rotation mais avec un mouvement axial limité, un levier à ressort (22) dans l'ensemble en forme de disque annulaire prévu entre le boîtier et le plateau de pressage, avec une pluralité d'éléments de levier disposés de manière espacée dans la direction périphérique pour actionner l'embrayage à friction, une dimension périphérique radialement extérieure du levier à ressort pouvant être modifiée à la suite d'un déplacement axial d'une région périphérique radialement interne du levier à ressort, une bague en rampe (62), par le biais de laquelle le levier à ressort s'applique contre le plateau de pressage, et un dispositif de rattrapage de l'usure (34) avec une roue à denture hélicoïdale (44) qui est réalisée avec une denture périphérique (46) et, dans un côté frontal, avec une gorge hélicoïdale (52), la denture périphérique coopérant avec une denture d'entraînement (48) réalisée sur un bras élastique (50), agissant dans une direction, de telle sorte que la roue à denture hélicoïdale, dans le cas d'une augmentation ou d'une réduction excessive de la dimension périphérique, soit tournée et que la gorge hélicoïdale soit en prise autobloquante avec une denture conjuguée (54) réalisée sur la bague en rampe, de telle sorte qu'une rotation de la roue à denture hélicoïdale provoque une rotation relative entre le levier à ressort et la bague en rampe, suite à quoi l'association entre la position du levier à ressort et la position du plateau de pressage se modifie dans le sens d'une compensation de l'usure des garnitures de friction, la roue à denture hélicoïdale (44) étant montée, du côté du levier à ressort (22) opposé au plateau de pressage (16), sur un composant de retenue (76) connecté au levier à ressort et la denture conjuguée (54) étant réalisée sur une face frontale d'un bras en porte-à-faux (66) de la bague en rampe (62).

8. Embrayage à friction comprenant un boîtier (12), un plateau de pressage (16) connecté à celui-ci de manière solidaire en rotation mais avec un mouvement axial limité, un levier à ressort (22) dans l'ensemble en forme de disque annulaire prévu entre le boîtier et le plateau de pressage, avec une pluralité d'éléments de levier disposés de manière espacée dans la direction périphérique pour actionner l'embrayage à friction, une dimension périphérique radialement extérieure du levier à ressort pouvant être modifiée à la suite d'un déplacement axial d'une région périphérique radialement interne du levier à ressort, et un dispositif de rattrapage de l'usure (34) avec une roue à denture hélicoïdale (44) qui est réalisée avec une denture périphérique (46) et, dans un côté frontal, avec une gorge hélicoïdale (52), la denture périphérique coopérant avec une denture d'entraînement (48) réalisée sur un bras élastique (50), agissant dans une direction, de telle sorte que la roue à denture hélicoïdale, dans le cas d'une augmentation ou d'une réduction excessive de la dimension périphérique, soit tournée et que la gorge hélicoïdale soit en prise autobloquante avec une denture conjuguée réalisée sur le boîtier (12), de sorte qu'une rotation de la roue à denture hélicoïdale provoque une rotation relative entre le levier à ressort et le plateau de pressage, suite à quoi l'association entre la position du levier à ressort et la position du plateau de pressage se modifie dans le sens d'une compensation de l'usure des garnitures de friction, le levier à ressort (22) et le plateau de pressage (16) étant réalisés avec des surfaces en rampe (80, 82) en appui mutuel, dont l'épaisseur axiale varie dans la direction périphérique, et la roue à denture hélicoïdale (44) étant montée à l'intérieur d'un évidement (84) du levier à ressort.
